# DEMANDE DE BREVET EUROPEEN

(11) **EP 3 698 612 A1**
(43) Date de publication de la demande: **26.08.2020**
(21) Numéro de dépôt: 20157980.2
(22) Date de dépôt: 18.02.2020
(51) Int. Cl.: A01B 3/46, A01B 15/14, A01B 63/16, A01B 63/22, A01B 69/00

(54) **CHARRUE AVEC UN DISPOSITIF DE COMPENSATION DE L'EFFORT LATÉRAL EN COURS DE LABOUR**

(30) Priorité: 21.02.2019 FR 1901730
(71) Demandeur: Kuhn-Huard S.A.S, 44110 Chateaubriant (FR)
(72) Inventeur: LE CLEC'H, Ronan, 44390 NORT-SUR-ERDRE (FR); HERAULT, Vincent, 44470 Mauve sur Loire (FR)
(74) Mandataire: Cabinet Nuss

(57) **Abrégé**

L'invention concerne une charrue (1) portée ou semi-portée comprenant essentiellement un bâti (2) portant des corps de labour (3) et relié par une structure articulée (4) à un dispositif frontal d'attelage (12), ladite charrue (1) comprenant en outre au moins une roue (5) d'appui au sol, laquelle est reliée audit bâti (2) par un dispositif (6) support de roue et montée avec faculté de pivotement ou d'orientation autour d'au moins un axe (X), orienté verticalement par rapport à la surface de roulement de ladite roue d'appui (5).

Charrue (1) caractérisée en ce qu'elle comprend également un dispositif (8) de réglage de l'angle d'orientation de ladite au moins une roue d'appui (5), par rapport audit au moins un axe (X) et/ou par rapport à la direction d'avance normale (A) de la charrue (1) en labour.

## Description

La présente invention concerne le domaine du machinisme agricole, plus particulièrement les équipements de travail du sol attelés à un tracteur en utilisation, et a pour objet une charrue portée ou semi-portée avec un dispositif de compensation de l'effort latéral généré par ladite charrue en cours d'utilisation.

Les charrues portées ou semi-portées visées par la présente invention sont du type comprenant essentiellement un bâti portant des corps de labour et relié par une structure articulée, intégrant éventuellement un timon, à un dispositif frontal d'attelage. Une telle charrue comprend en outre au moins une roue d'appui au sol, laquelle est reliée audit bâti par un dispositif support de roue, faisant ou non partie d'un chariot porteur, par exemple intermédiaire ou solidaire de l'arrière dudit bâti. Ladite au moins une roue d'appui est montée avec faculté de pivotement ou d'orientation autour d'au moins un axe, orienté verticalement par rapport à la surface de roulement de la roue d'appui concernée.

Un exemple de charrue semi-portée du type visé est par exemple illustré sur la figure 1 du document WO-A-2016192712.

La charrue illustrée sur cette figure présente un timon 24 et la structure articulée de liaison intègre, à l'avant, à la suite du dispositif frontal d'attelage (par exemple à trois points), un cardan composé d'une articulation pivot verticale 9 et d'une articulation pivot horizontale 21.

Une telle charrue ameublit, émiette, enfouit et mélange. C'est un outil complexe par son mode d'action, par ses réglages et par de nombreux équipements qui influent sur le travail réalisé.

Il est connu que pendant le labour, la largeur de travail évolue (la largeur réelle est différente de la largeur théorique) puisque la charrue réagit aux conditions de travail lorsqu'elles évoluent. Ces réactions se ressentent au niveau du tracteur et influent sur sa conduite et sa stabilité latérale par rapport à la ligne d'avancement.

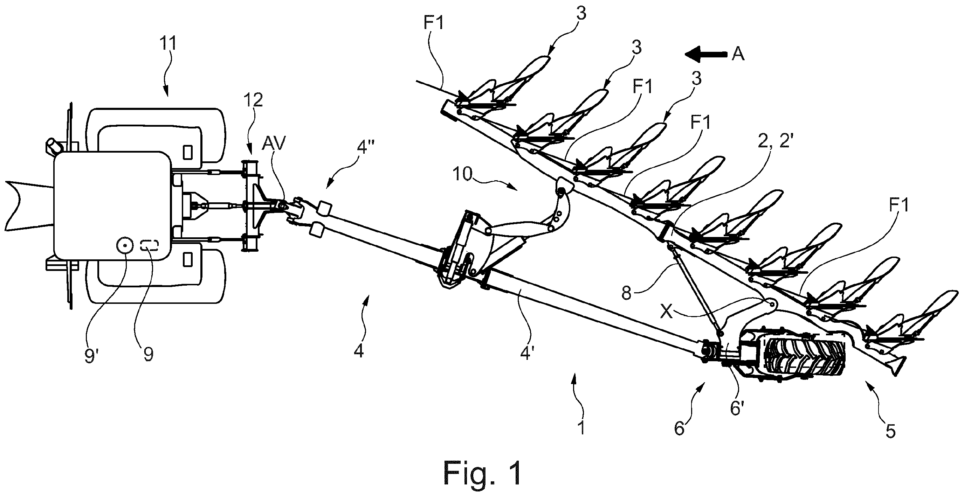

Les efforts agissant lors du labour, sur les corps de labour individuels, disposés obliquement vers l'arrière peuvent être matérialisés par un point commun d'application situé dans la direction longitudinale approximativement au milieu du bâti 2 de la charrue : ce point commun d'application est appelé le point de traction virtuel (référence 20 sur la figure 1 du document WO précité).

En relation avec la figure 1 du document WO précité, on peut relever que l'effort de traction exercée par le tracteur 7 pour tirer la charrue semi-portée monoroue agit selon la ligne de traction 27 entre le point de traction virtuel 20 et l'axe vertical d'articulation 9. Idéalement cette ligne de traction 27 passe par le centre de l'essieu arrière 25 du tracteur. En réalité cependant, la ligne de traction 27 s'étend à une distance (notée (a) sur cette figure 1) par rapport au centre de l'essieu arrière 25.

Cette distance produit un couple ou un bras de levier qui agit, d'une part, sur la roue d'appui comme vu précédemment et, d'autre part, sur le tracteur 7 du fait de l'effort de traction. Le chauffeur du tracteur compense l'effort résultant de ce couple (appelé effort latéral) par un braquage dirigé contre le bord du sillon. L'effort latéral altère la capacité à diriger le tracteur et exige un effort de traction plus important. Cela nécessite une attention accrue du chauffeur du tracteur et entraine une consommation de carburant plus élevée.

L'effort de traction varie en intensité et en position en fonction du nombre de corps de labour et de la largeur de coupe de la charrue, et l'effort latéral évolue en fonction de l'effort de traction.

L'influence de cet effort latéral est différente en labour « hors raie » puisque le tracteur évolue sur la partie du sol non labourée : ses quatre roues sont situées en dehors de la raie. Pour ce type de labour, la stabilité latérale du tracteur est assez délicate à maintenir du fait des variations de la position du centre de réaction des efforts de labour qui s'exercent sur la charrue par rapport au centre de traction du tracteur.

Dans le contexte précité, il existe par conséquent un problème récurrent de décalage de la ligne de traction par rapport au centre du tracteur, produisant de ce fait un effort latéral qui est néfaste pour un labour efficace, économique et aisé à réaliser pour le conducteur.

Pour tenter de résoudre ce problème dans le cas d'une charrue semi-portée, la charrue divulguée par le document WO-A-2016192712 précité propose, en vue de conserver un angle optimal de la charrue avec la direction d'avance, de bloquer la rotation autour de l'axe vertical d'articulation 9 du cardan du dispositif d'attelage au moyen d'un accumulateur d'énergie 10. Ainsi, le fonctionnement d'une charrue portée est reproduit au travail. L'accumulateur d'énergie 10 est du type vérin à simple effet.

Outre la nécessité d'un surdimensionnement, adapté aux contraintes importantes subies, des parties concernées du dispositif d'attelage et du moyen mis en œuvre, ce système de verrouillage connu de ce document WO présente également l'inconvénient de devoir être déverrouillé à chaque bout de champ pour que le tracteur et la charrue semi-portée puissent effectuer le demi-tour requis.

La présente invention a pour but de proposer une solution alternative pour surmonter le problème précité, ne présentant pas au moins les inconvénients majeurs du système précité.

De plus, la solution proposée par l'invention devrait pouvoir être appliquée aussi bien aux charrues portées que semi-portées, monoroue ou à chariot porteur.

Ce but est atteint par l'invention en prévoyant, pour une charrue du type mentionné en introduction, qu'elle comprenne également un dispositif de réglage de l'angle de pivotement ou d'orientation de ladite au moins une roue d'appui, par rapport audit au moins un axe et/ou par rapport à la direction d'avance normale de la charrue en labour.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] et
[Fig. 2] sont des vues de dessus d'un attelage tracteur + charrue comprenant une charrue semi-portée monoroue équipée d'un dispositif de réglage selon l'invention, avec indication des efforts individuels et de l'effort global agissant sur les corps de labour et la charrue, du couple et de la dérive qui en résultent, ainsi que de la correction obtenue par la mise en œuvre de la solution particulière de l'invention ;
[Fig. 3] est une vue de dessus d'une charrue portée comportant un dispositif de réglage selon l'invention ;
[Fig. 4] est une vue de dessus d'une autre variante de réalisation d'une charrue semi-portée monoroue comportant un dispositif de réglage selon l'invention, ladite charrue étant aussi attachée à un tracteur, et,
[Fig. 5] est une vue de dessus d'une charrue semi-portée avec un chariot porteur comportant un dispositif de réglage selon l'invention et attachée à un tracteur.

Les figures 1 à 5 montrent toutes une charrue 1 portée ou semi-portée comprenant essentiellement un bâti 2 portant des corps de labour 3 et relié par une structure articulée 4, intégrant éventuellement un timon 4', à un dispositif frontal d'attelage 12. Ladite charrue 1 comprend en outre au moins une roue 5, 5' d'appui au sol, laquelle est reliée audit bâti 2 par un dispositif 6 support de roue, faisant ou non partie d'un chariot porteur 7 intermédiaire ou solidaire de l'arrière dudit bâti 2. Le chariot porteur 7 peut être intégré à la partie intermédiaire ou centrale de la charrue 1 ou être solidarisé à une telle partie.

Ladite au moins une roue d'appui 5, 5' est montée avec faculté de pivotement ou d'orientation autour d'au moins un axe X, orienté verticalement par rapport à la surface de roulement de ladite roue d'appui 5, 5'.

Comme le montrent également ces figures, la charrue 1 peut comporter une unique roue d'appui 5 (version portée ou semi-portée monoroue) ou au moins deux roues d'appui 5 et 5' (version à chariot porteur).

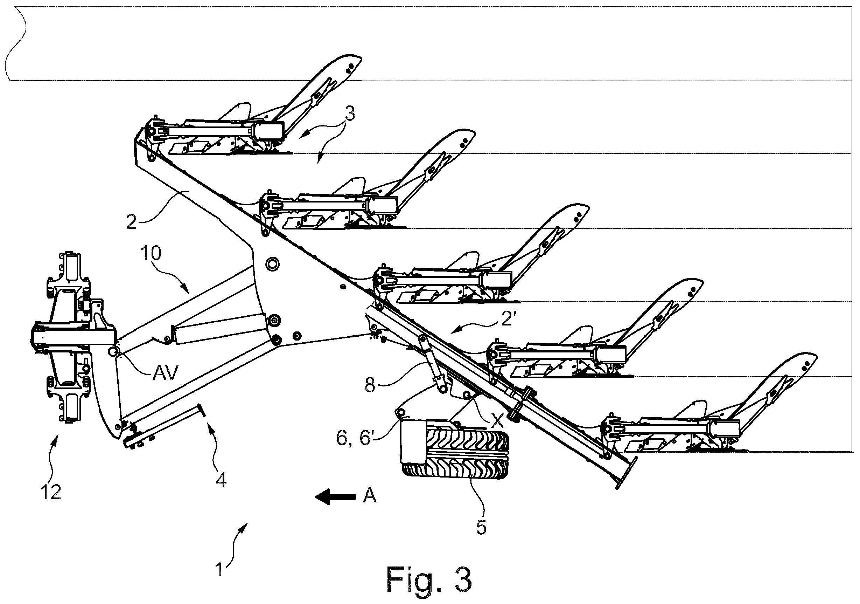

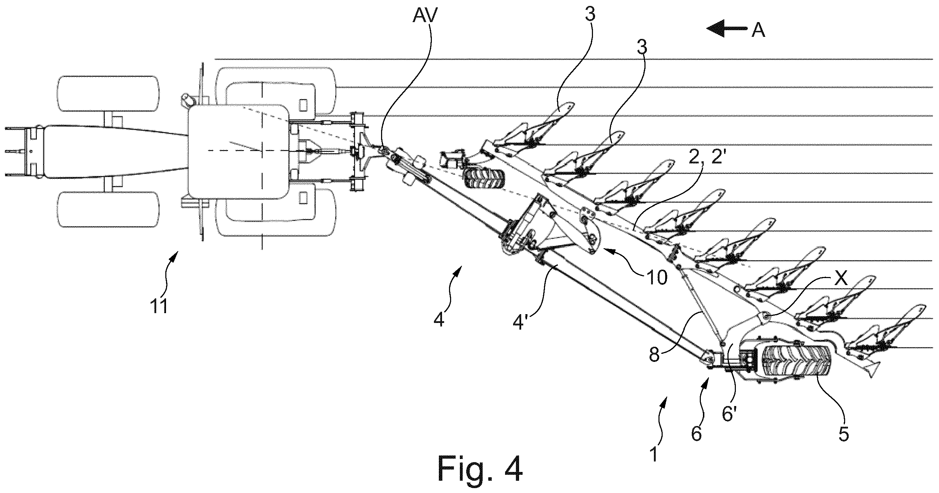

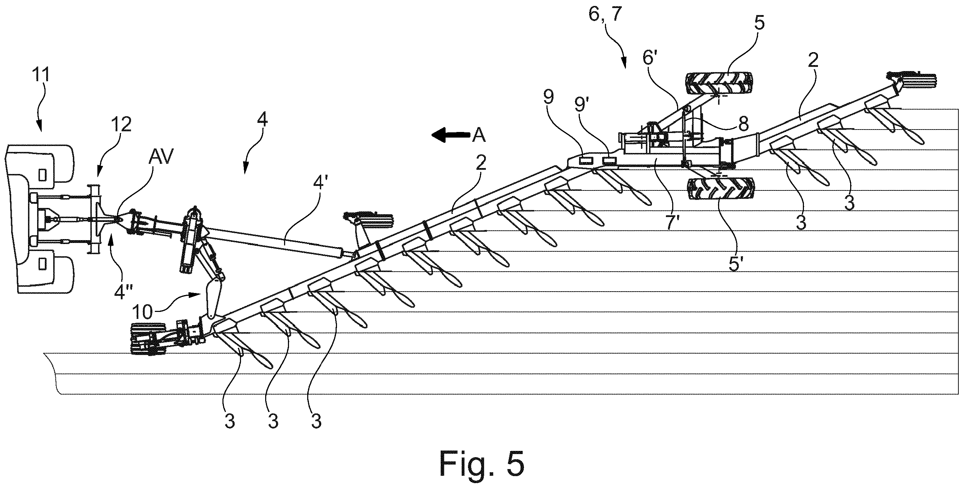

De plus, la structure articulée 4 de la charrue 1, reliant son bâti 2 à son dispositif 12 d'attelage à un tracteur 11, peut comprendre, par exemple, un parallélogramme (figure 3) ou un cardan 4" associé à un timon 4' (figures 4 et 5).

Des charrues de ces différents types sont par exemple connues par les documents EP 2 353 351 (semi-portée avec chariot), EP 2 524 583 (semi-portée monoroue) et EP 2 158 798 (portée) au nom de la demanderesse.

En outre, ladite charrue 1 comprend aussi avantageusement un système (non représenté) de réglage de la largeur de travail (par exemple de type manuel connu sous la dénomination « MULTI », ou de type hydraulique connu sous la dénomination « VARI ») et/ou un mécanisme 10 de déport du bâti 2.

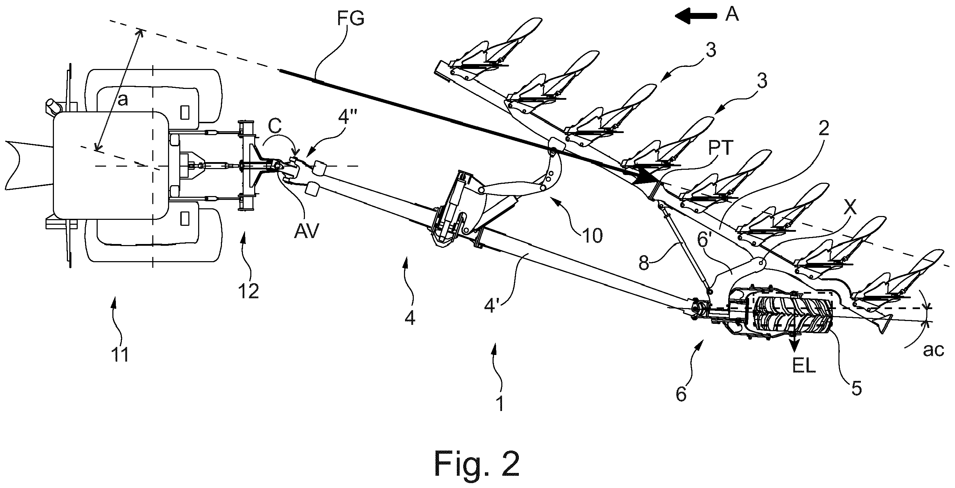

Conformément à l'invention, cette charrue 1 comprend également un dispositif 8 de réglage de l'angle de pivotement ou d'orientation de ladite au moins une roue d'appui 5, 5', par rapport audit au moins un axe X et/ou par rapport à la direction d'avance normale A de la charrue 1 en labour. Ce dispositif 8 est ainsi spécifiquement configuré pour compenser la dérive de la charrue 1 lors du labour. La dérive est positive ou négative selon la configuration de travail sillon ou « hors raie » de la charrue 1 et le nombre de corps de labour 3. L'angle de pivotement de la roue d'appui 5, 5' réglé par le dispositif 8 est visible à la figure 2. L'angle de compensation ou de correction ac s'étend entre la direction de roulement de la roue d'appui 5, 5' représentée par un trait plein (correction en relation avec l'invention) et la direction de roulement de la roue d'appui schématisée en traits discontinus (absence de correction - état de la technique). La direction en traits discontinus est parallèle à la direction d'avance A du tracteur 11.

Les figures 1 et 2 illustrent symboliquement, pour une charrue avec huit corps de labour, et fonctionnant en labour «hors raie », les efforts individuels (F1) agissant sur chacun des corps de labour (figure 1) et l'effort global (FG = somme des efforts individuels F1) agissant sur le point de traction PT virtuel (figure 2). La figure 2 illustre la distance (a) entre la ligne de traction (passant par PT) et le centre de l'essieu arrière du tracteur 11 et également le couple C résultant de l'action de FG au niveau du cardan avant 4", qui entraîne une dérive de la charrue et un ripage de la roue d'appui du fait de l'effort latéral EL généré au niveau de cette dernière. L'orientation de la roue d'appui est donc dissociée de la direction d'avance normale de la charrue en labour.

Sur ces deux figures (figure 1 et figure 2), la roue d'appui 5 sans possibilité de modification de l'angle (c'est-à-dire conforme à l'état de la technique) est représentée schématiquement par un rectangle en traits discontinus.

L'angle de compensation ac ne change pas lors du passage du labour avec les corps droits au labour avec les corps gauches sur une charrue réversible. Le dispositif 8 de réglage de l'angle de pivotement n'est pas modifé/actionné lors du retournement. L'angle ac est maintenu et la correction précédente est donc automatiquement retrouvée.

Grâce au dispositif de réglage 8 précité, il est possible, dans le cadre de l'invention, de régler et de bloquer l'angle ou l'orientation de ladite au moins une roue d'appui 5, 5' et par ce biais de compenser l'effort latéral EL de la charrue 1, et donc recentrer la ligne de traction par rapport au tracteur 11. Avec une telle compensation de l'effort latéral EL au niveau de la roue 5, 5', la conduite pour le chauffeur est moins pénible et la consommation de carburant du tracteur est réduite. L'avantage principal de ce dispositif de réglage 8 pour la charrue est que la largeur de travail réelle est proche de la largeur de travail théorique. Ceci est particulièrement important dans le cadre d'un guidage du tracteur 11 et plus particulièrement de la charrue 1 via un dispositif GPS. Un autre avantage est que les pièces travaillantes telles que les pointes, les contreseps et les versoirs des corps de labour 3 sont orientés dans la position prévue constructivement. Avec une telle orientation, les conditions de travail sont optimales et l'usure des pièces travaillantes est moins rapide. L'usure des contreseps est plus régulière puisque le contact avec la muraille se fait sur toute sa longueur, le contact étant plan. Par conséquent, et contrairement à son positionnement normal lors de l'utilisation de la charrue 1, la roue d'appui 5, 5' concernée est alors, du fait de l'action du dispositif selon l'invention, inclinée par rapport aux contreseps des corps de labour 3.

Avantageusement, le ou chaque dispositif 6 support de roue comprend un bras de roue 6' relié de manière articulée à une partie de bâti 2' portant des corps de labour 3 ou appartenant à un chariot porteur 7, et le cas échéant à l'arrière d'un timon 4', ledit bras de roue 6' assurant le guidage orienté de ladite au moins une roue d'appui 5, 5'.

En outre, le dispositif 8 de réglage de la ou de chaque roue d'appui 5, 5' est préférentiellement arrangé entre la partie de bâti 2' précitée et le bras de roue 6' concerné. Le dispositif de réglage 8 permet de recentrer la ligne de traction de la charrue 1 sur le tracteur 11 que ce soit en labour sillon ou en labour « hors raie ». L'effort latéral sur la roue 5, 5', et donc la dérive, est différent selon le mode de labour. En labour sillon, la dérive augmente lorsque la largeur de coupe des corps de labour 3 augmente. Au contraire, la dérive augmente lorsque la largeur de coupe des corps de labour 3 diminue en labour « hors raie ». Dans les deux cas, l'angle de la roue 5, 5' va, dans le cadre de l'invention, augmenter pour contrer la dérive.

On aboutit ainsi à une construction simple et robuste, avec un dispositif de réglage 8 situé dans l'encombrement de la charrue 1.

En accord avec un premier mode de réalisation ressortant des figures 3 et 4, il peut être prévue que, dans le cas d'une charrue 1 portée ou semi-portée monoroue, l'axe X de pivotement de la roue d'appui 5 corresponde à l'axe d'articulation entre le bâti 2 et un bras de roue 6' faisant partie du dispositif de support de roue 6.

En accord avec un second mode de réalisation, illustré à titre d'exemple sur la figure 5, il peut être prévu que, dans le cas d'une charrue 1 semi-portée à chariot porteur 7 à deux roues d'appui 5 et 5', chaque roue 5, 5' soit montée de manière séparée et indépendante sur le châssis 7' du chariot 7 et soit reliée par un bras support 6' propre à ce dernier. La roue d'appui 5 dont l'angle d'orientation est réglé positivement ou négativement, selon le cas, est préférentiellement celle qui ne circule pas dans le sillon existant lors du déplacement de la charrue 1 en labour.

La figure 4 illustre une charrue 1 dans une configuration de travail en sillon, c'est-à-dire avec toutes les roues d'un même côté du tracteur 11 circulant dans le sillon ouvert lors du passage précédent. La charrue 1 comporte un mécanisme 10 de déport du bâti 2. Ce mécanisme 10 permet à la charrue 1 d'effectuer un travail sillon ou « hors raie » avec une grande variété de tracteurs 11, quelle que soit la voie et la monte de pneus sur les roues du tracteur 11 considéré. Le mécanisme 10 est avantageusement placé entre le timon 4, 4' et le bâti 2, 2'. Le mécanisme 10 comporte des bielles de déport et un vérin de déport. Le mécanisme 10 représenté sur la figure 4 est réglé en configuration sillon et sa position adaptée à la voie du tracteur 11. Dans une réalisation différente, le mécanisme 10 est composé d'un dispositif pour déplacer le bâti 2, 2' par rapport au timon 4, 4', par exemple un tirant réglable ou un dispositif télescopique.

La figure 5 illustre une configuration de travail dite « hors raie », c'est-à-dire avec toutes les roues du tracteur 11 circulant sur la partie non labourée. Le tracteur 11 circule uniquement sur du terrain non labouré préalablement. Le bâti 2 est déporté par rapport au tracteur 11. Le mécanisme 10 représenté sur la figure 5 est réglé en configuration « hors raie » et à la largeur du tracteur 11.

Une 5' des roues d'appui du chariot 7 circule dans un sillon creusé par un corps de labour 3 qui la précède et l'autre roue d'appui 5 réglable en orientation par un dispositif 8 circule en dehors du sillon et du terrain labouré.

Avec un essieu indépendant par roue 5, 5' et l'utilisation de la roue 5 hors sillon pour produire l'effort compensatoire, le réglage de l'orientation n'est pas gêné par la configuration du terrain labouré (pas de risque de buter contre la muraille).

Dans les deux modes de réalisation précités, on peut relever que la liaison articulée en pivotement entre le bras support 6' et le châssis 2 est située à une distance importante de l'axe d'articulation vertical AV de la structure de liaison 4, préférentiellement au niveau d'une portion arrière dudit bâti 2. Une telle construction permet, avec une modification mineure d'angle ou d'orientation de la roue d'appui 5, 5' (N.B. : quelques degrés seulement) et grâce au bras de levier important fourni, de générer un effort compensatoire d'intensité suffisante pour aboutir à la correction recherchée pour la ligne de traction.

Selon une première variante constructive, le ou chaque dispositif de réglage 8 consiste en un organe espaceur à réglage manuel, tel qu'un tirant à longueur réglable ou une entretoise télescopique.

Selon une seconde variante constructive, le ou chaque dispositif de réglage 8 consiste en un organe espaceur ou d'entretoisement réglable en longueur par commande hydraulique ou électrique, tel qu'un vérin ou analogue.

Le dispositif de réglage 8 selon les deux variantes est configuré pour permettre un réglage dans les deux sens, c'est-à-dire contrer aussi bien une dérive négative que positive de la charrue 1. Dans le cas d'un organe espaceur du type tirant, il est configuré pour contrer la dérive dans les deux sens. Dans le cas d'un organe espaceur du type vérin, ce dernier est de type à double effet.

Dans le cadre de cette seconde variante, il peut être prévu que le dispositif de réglage 8 soit fonctionnellement assujetti à un dispositif de contrôle 9 assurant automatiquement une correction ou une compensation en fonction de données de mesure fournies, préférentiellement en temps réel, durant l'utilisation de la charrue 1. Le dispositif de contrôle 9, représenté sur les figures 1 et 5, est positionné dans le tracteur 11 ou sur la charrue 1.

Grâce au dispositif de réglage 8, la roue d'appui 5, 5' devient directrice pour contrer la dérive et permettre à la charrue 1 que la largeur de travail réelle corresponde à la largeur de travail théorique. En option, la charrue 1 peut être équipée d'une roue d'appui 5, 5' motrice. Dans une alternative, la roue d'appui 5, 5' est remplacée par un système à chenille. Le dispositif de réglage 8 précité est aussi configuré pour bloquer l'angle ou l'orientation de ladite au moins une roue d'appui 5, 5' lors du transport sur route de la charrue 1 ou lors de manœuvres en bout de champ.

Les données de mesure précitées peuvent par exemple être fournies :
- soit par un dispositif GPS, équipant ladite charrue 1 et/ou le tracteur 11 auquel elle est attachée en utilisation,
- soit par des capteurs embarqués, sur ladite charrue 1 et/ou sur le tracteur 11 auquel elle est attachée en utilisation.

Le bâti 2 ou l'un au moins des corps de labour 3 est équipé d'un ou plusieurs capteur pour capter la dérive de la charrue 1 et l'électronique est configurée pour effectuer une correction de l'angle ou l'orientation de la roue d'appui 5, 5', de manière automatique. La dérive peut être captée par exemple par un capteur de pression placé sur l'un des contreseps, préférentiellement le dernier contresep de la charrue 1. Selon une autre possibilité, il peut être prévu de placer un capteur d'angle à l'avant d'une charrue 1 semi-portée, telle que représentée sur les figures 4 et 5, ce au niveau de l'axe d'articulation vertical (AV) du cardan 4" associé au timon 4'. Il est, par ailleurs, également possible d'utiliser un capteur du type caméra qui permet de retrouver l'angle via une analyse d'images. Enfin, un capteur d'angle gyroscopique permet également de retrouver l'angle et de le corriger via le dispositif de réglage 8.

D'une manière particulièrement avantageuse, le dispositif de réglage 8 peut être réglé pour s'adapter aux zones d'une carte de préconisation d'une parcelle. Dans ce cas, l'antenne GPS 9' du tracteur 11 et/ou de la charrue 1 permet de connaitre la position de la charrue 1 dans la parcelle et ainsi d'ajuster de manière automatique ou manuelle l'orientation de la roue d'appui 5, 5'. La carte de préconisation modélise différentes zones d'une parcelle en fonction du type de sol, par exemple sol léger, sol moyen ou sol dur. Ces différents types de sol ont une influence directe sur l'effort latéral lors du labour.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Charrue (1) portée ou semi-portée comprenant essentiellement un bâti (2) portant des corps de labour (3) et relié par une structure articulée (4), intégrant éventuellement un timon (4'), à un dispositif frontal d'attelage (12), ladite charrue (1) comprenant en outre au moins une roue (5, 5') d'appui au sol, laquelle est reliée audit bâti (2) par un dispositif (6) support de roue, faisant ou non partie d'un chariot porteur (7),
ladite au moins une roue d'appui (5, 5') étant montée avec faculté de pivotement ou d'orientation autour d'au moins un axe (X), orienté verticalement par rapport à la surface de roulement de ladite roue d'appui (5, 5'),
charrue (1) **caractérisée en ce qu'**elle comprend également un dispositif (8) de réglage de l'angle de pivotement ou d'orientation de ladite au moins une roue d'appui (5, 5'), par rapport audit au moins un axe (X) et/ou par rapport à la direction d'avance normale (A) de la charrue (1) en labour.

2. Charrue selon la revendication 1, **caractérisée en ce que** le ou chaque dispositif (6) support de roue comprend un bras de roue (6') relié de manière articulée à une partie de bâti (2') portant des corps de labour (3) ou appartenant à un chariot porteur (7), et le cas échéant à l'arrière d'un timon (4'), ledit bras de roue (6') assurant le guidage orienté de ladite au moins une roue d'appui (5, 5'), et **en ce que** le dispositif (8) de réglage de la ou de chaque roue d'appui (5, 5') est arrangé entre la partie de bâti (2') précitée et le bras de roue (6') concerné.

3. Charrue selon l'une quelconque des revendications 1 et 2, **caractérisée en ce que**, dans le cas d'une charrue (1) portée ou semi-portée monoroue, l'axe (X) de pivotement de la roue d'appui correspond à l'axe d'articulation entre le bâti (2) et un bras de roue (6') faisant partie du dispositif de support de roue (6).

4. Charrue selon l'une quelconque des revendications 1 et 2, **caractérisée en ce que**, dans le cas d'une charrue (1) semi-portée à chariot porteur (7) à deux roues d'appui (5 et 5'), chaque roue (5, 5') est montée de manière séparée et indépendante sur le châssis (7') du chariot (7) et est reliée par un bras support (6') propre à ce dernier, la roue d'appui (5) dont l'angle d'orientation est réglé positivement ou négativement, selon le cas, étant celle qui ne circule pas dans le sillon existant lors du déplacement de la charrue (1) en labour.

5. Charrue selon l'une quelconque des revendications 1 à 4, **caractérisée en ce que** le ou chaque dispositif de réglage (8) consiste en un organe espaceur à réglage manuel, tel qu'un tirant à longueur réglable ou une entretoise télescopique.

6. Charrue selon l'une quelconque des revendications 1 à 4, **caractérisée en ce que** le ou chaque dispositif de réglage (8) consiste en un organe espaceur ou d'entretoisement réglable en longueur par commande hydraulique ou électrique, tel qu'un vérin ou analogue.

7. Charrue selon la revendication 6, **caractérisée en ce que** le dispositif de réglage (8) est fonctionnellement assujetti à un dispositif de contrôle (9) assurant automatiquement une correction ou une compensation en fonction de données de mesure fournies, préférentiellement en temps réel, durant l'utilisation de la charrue (1).

8. Charrue selon la revendication 7, **caractérisée en ce que** les ou au moins certaines des données de mesure sont fournies par un dispositif GPS, équipant ladite charrue (1) et/ou le tracteur (11) auquel elle est attachée en utilisation.

9. Charrue selon la revendication 7 ou 8, **caractérisée en ce que** les ou au moins certaines des données de mesure sont fournies par des capteurs embarqués, sur ladite charrue (1) et/ou sur le tracteur (11) auquel elle est attachée en utilisation.

10. Charrue selon l'une quelconque des revendications 1 à 9, **caractérisée en ce qu'**elle comprend un système de réglage de la largeur de travail et/ou un mécanisme (10) de déport du bâti (2).
